# EUROPÄISCHE PATENTSCHRIFT

(11) **EP 3 595 919 B1**
(45) Veröffentlichungstag und Bekanntmachung des Hinweises auf die Patenterteilung: **27.10.2021**
(21) Anmeldenummer: 18711497.0
(22) Anmeldetag: 05.03.2018
(51) Int. Cl.: B60H 1/00, B60H 1/32, F25B 25/00, F25B 41/39, F25B 13/00, F25B 40/00

(54) **KÄLTEANLAGE EINES FAHRZEUGS MIT EINEM ALS KÄLTEKREISLAUF FÜR EINEN AC-BETRIEB UND ALS WÄRMEPUMPENKREISLAUF FÜR EINEN HEIZBETRIEB BETREIBAREN KÄLTEMITTELKREISLAUF**
COOLING SYSTEM OF A VEHICLE, COMPRISING A COOLANT CIRCUIT WHICH CAN BE OPERATED AS A COOLING CIRCUIT FOR AN AC OPERATION AND AS A HEAT PUMP CIRCUIT FOR A HEATING OPERATION
INSTALLATION FRIGORIFIQUE D'UN VÉHICULE AVEC UN CIRCUIT DE RÉFRIGÉRANT POUVANT FONCTIONNER COMME UN CIRCUIT FRIGORIFIQUE POUR UN MODE AC ET COMME CIRCUIT DE POMPE À CHALEUR POUR UN MODE DE CHAUFFAGE

(30) Priorität: 13.03.2017 DE 102017204116
(43) Veröffentlichungstag der Anmeldung: 22.01.2020
(73) Patentinhaber: Audi AG, 85045 Ingolstadt (DE)
(72) Erfinder: SCHROEDER, Dirk, 85077 Manching (DE); REBINGER, Christian, 80807 München (DE); ANZENBERGER, Thomas, 85049 Ingolstadt (DE)
(86) Internationale Anmeldenummer: PCT/EP2018/055262
(87) Internationale Veröffentlichungsnummer: WO 2018/166820

(56) Entgegenhaltungen:
- EP-A1- 1 695 849
- WO-A1-2011/029538
- DE-A1-102011 118 162
- DE-A1-102012 108 731
- DE-A1-102013 021 360
- JP-A- 2004 098 974

## Beschreibung

Die Erfindung betrifft eine Kälteanlage eines Fahrzeugs mit einem als Kältekreislauf für einen AC-Betrieb und als Wärmepumpenkreislauf für einen Heizbetrieb betreibaren Kältemittelkreislauf gemäß dem Oberbegriff des Patentanspruchs 1.

Es ist bekannt einen Kältemittelkreislauf einer Fahrzeugklimaanlage sowohl für den Kältebetrieb (AC-Betrieb) als auch für den Heizbetrieb mittels einer Wärmepumpenfunktion zum Aufheizen der Fahrgastzelle auszubilden. In seiner Funktion als Wärmepumpe ist der Kältemittelkreislauf in der Lage, einen Luft- oder auch Wasserstrom bzw. Kühlmittelstrom zu erwärmen und diese Wärme direkt bzw. indirekt an die Zuluft der Fahrgastzelle abzugeben.

Ein gattungsbildender Kältemittelkreislauf ist aus der DE 10 2011 118 162 A1 bekannt, der sowohl in einem Kältebetrieb als auch in einem Heizbetrieb mittels einer Wärmepumpenfunktion zum Aufheizen der Fahrgastzelle betreibbar ist. Zur Durchführung des Luft-Heizbetriebes wird ein für den Kältebetrieb eingesetzter Kältemittelkondensator als Wärmepumpenverdampfer betrieben und im Vergleich zum Kältebetrieb in umgekehrter Richtung mit Kältemittel durchströmt. Die Funktion als Wärmepumpenverdampfer wird realisiert, indem in einem Leitungszweig zwischen einem Hochdruckabschnitt des inneren Wärmeübertragers und dem Wärmepumpenverdampfer ein Expansionsventil angeordnet ist, mit welchem Kältemittel zur Realisierung der Funktion "Wärmepumpenverdampfer" in den Kältemittelkondensator expandiert wird. Im Wärmepumpenmodus als auch im Kältebetrieb wird der Hochdruckabschnitt des inneren Wärmeübertragers in gleicher Richtung mit Kältemittel durchströmt, wobei zwischen dem Hochdruckabschnitt des inneren Wärmeübertragers und einem Heizregister ein weiteres Expansionsventil angeordnet ist.

Dieses weitere Expansionsventil gemäß der DE 10 2011 118 162 A1 dient in einem Reheat-Betrieb zur Einstellung eines Mitteldrucks, indem das von einem Kältemittelverdichter verdichtete Kältemittel in zwei Teilströme aufgeteilt wird, so dass ein Teilstrom über den Kältemittelkondensator und einem Expansionsorgan zum Eingang des Hochdruckabschnittes des inneren Wärmeübertragers geführt wird, an welchem dieser Teilstrom mit dem über das Heizregister und dem weiteren Expansionsorgans geführten Teilstrom zusammengeführt wird.

Ein weiterer gattungsbildender Kältemittelkreislauf ist aus der DE 10 2012 108 731 A1 bekannt, der sowohl in einem Kältebetrieb als auch in einem Heizbetrieb mittels einer Wärmepumpenfunktion zum Aufheizen der Fahrgastzelle betreibbar ist. Zur Durchführung eines Luft-Heizbetriebes wird ein für den Kältebetrieb eingesetzter Kältemittelkondensator als Wärmepumpenverdampfer betrieben und im Vergleich zum Kältebetrieb in umgekehrter Richtung mit Kältemittel durchströmt. Die Funktion als Wärmepumpenverdampfer wird realisiert, indem in einem Leitungszweig zwischen einem Hochdruckabschnitt des inneren Wärmeübertragers und dem Wärmepumpenverdampfer ein Expansionsventil angeordnet ist, mit welchem Kältemittel zur Realisierung der Funktion "Wärmepumpenverdampfer" in den Kältemittelkondensator expandiert wird. Hierbei ist der Hochdruckabschnitt des inneren Wärmeübertragers über ein weiteres Expansionsventil mit einem Heizregister verbunden. Im Kühlbetrieb strömt das Kältemittel aus dem Kältemittelkondensator über das offene Expansionsorgan in den Hochdruckabschnitt des inneren Wärmeübertragers und von dort wird es über ein verdampferseitiges Expansionsorgan in einen Verdampfer entspannt. Im Luft-Wärme-pumpenbetrieb strömt das Kältemittel aus dem Heizregister über ein weiteres Expansionsventil in den Hochdruckabschnitt des inneren Wärmeübertragers und wird von dort mittels des Expansionsventils in den als Wärmepumpenverdampfer eingesetzten Kältemittelkondensator entspannt. Das weitere Expansionsventil ist geschlossen, wenn ein Reheat-Betrieb über den Kältemittelverdichter, das Heizregister und den Verdampfer durchgeführt wird. Es wird zusätzlich auch zur Vorentspannung eingesetzt, wenn ein Mangel an Kältemittel im Wärmepumpenbetrieb vorliegt. Auch die WO 2011/029538 beschreibt einen Kältemittelkreislauf für ein von einer Elektromaschine angetriebenen Elektrofahrzeug. Dieser Kältemittelkreislauf ist sowohl in einem Kältebetrieb als auch in einem Heizbetrieb mittels einer Luft-Wärmepumpenfunktion oder mittels einer die Abwärme einer Batterie nutzenden Wärmepumpenfunktion betreibbar. Hierzu ist im Kältemittelkreislauf zusätzlich ein mit Elektromaschine thermisch gekoppelter Wärmetauscher und/oder ein mit der Batterie thermisch gekoppelter Wärmetauscher zuschaltbar.

Die DE 10 2013 021 360 A1 beschreibt ein Thermomanagementsystem für ein Kraftfahrzeug mit einem Kältemittelkreislauf, welches eine effiziente und aktive Batteriekühlung und einen Wärmepumpenprozess zur Heizung des Innenraums oder der Batterie ermöglicht und deren primäre Führungsgröße eine geforderte Abkühltemperaturdifferenz des Kühlmediums Wasser-Glykol ist. Im reinen Kühlmodus der Fahrzeugbatterie wird gezielt eine Kältemittelgüte, welche einem bestimmten Dampfgehalt entspricht, am Austritt eines Chillers über eine Stellung des demselben zugeordneten Expansionsorgans nahe an der Taulinie des verwendeten Kältemittels bei minimaler Leistungsaufnahme eines Kältemittelverdichters eingestellt.

Aus der EP 1 695 849 A1 ist ein Kältemittelkreislauf mit einer Wärmepumpenfunktion bekannt. Zur Entfeuchtung wird das von einem Kältemittelverdichter gelieferte Kältemittel zur Wärmeabgabe durch einen internen Gaskühler geführt und anschließend in zwei Teilströme aufgeteilt, so dass ein Teilstrom in einen Verdampfer zur Aufnahme von Wärme geführt und ein zweiter Teilstrom in einen äußeren Wärmetauscher zur Aufnahme von Wärme entspannt wird.

Um gemäß der JP 2004 098974 A einen Druckverlust in einem Klimagerät einer Klimaanlage zu verhindern, ist in diesem Klimagerät neben einem Heizregister ein zweiter Wärmetauscher angeordnet. Hierbei sind die beiden Heizregister bezüglich des Luftstroms in dem Klimagerät nicht seriell angeordnet.

Bei solchen Kältemittelkreisläufen mit oder ohne Wärmepumpenfunktion werden innere Wärmeübertrager als leistungssteigernde und effizienzsteigernde Maßnahmen eingesetzt, mit welchen Wärmeenergie von der Hochdruckseite des Kältemittelkreislaufs auf dessen Niederdruckseite übertragen wird und dadurch die Temperatur des Kältemittels vor Eintritt in ein Expansionsorgan des Kältemittelkreislaufs gesenkt und gleichzeitig die Temperatur vor Eintritt in den Verdichter angehoben wird.

Im Zusammenhang mit dem Einsatz eines inneren Wärmeübertragers kann eine problematische Temperaturerhöhung auf der Niederdruckseite vor dem Kältemittelverdichter auftreten, wobei insbesondere im Hochlastbetrieb dieser zusätzliche Wärmeeintrag zu kritischen Betriebstemperaturen des Kältemittelverdichters, insbesondere zu Heißgasproblemen führen kann. Eine solche durch den inneren Wärmeübertrager bedingte Temperaturerhöhung kann auch in einem Wärmepumpenmodus eines Kältemittelkreislaufs auftreten, da zwischen der Hochdruckseite und der Niederdruckseite in den Kältemitteltemperaturen ebenso deutliche Temperaturunterschiede und damit höhere Temperaturgradienten auftreten können. Dieses Problem wird bei dem aus der DE 100 06 513 B4 bekannten und gattungsbildenden Kältemittelkreislauf nicht angesprochen, obwohl bei diesem bekannten Kältemittelkreislauf im Wärmepumpenmodus ein innerer Wärmeübertrager sowohl auf dessen Hochdruckseite als auch auf dessen Niederdruckseite von Kältemittel durchströmt wird.

Aus der EP 1 456 046 B1 ist eine Kälteanlage mit einem gattungsbildenden Kältemittelkreislauf für ein Fahrzeug bekannt, welcher sowohl als Kälteanlage im AC-Betrieb als auch in einem Wärmepumpenmodus im Heizbetrieb betrieben werden kann. Im Wärmepumpenmodus wird das verdichtete Kältemittel mittels eines Wärmepumpenleitungsabschnittes des Kältemittelkreislaufs einem in einem Klimagerät angeordneten Heizregister zugeführt, um direkt die Zuluft zum Fahrzeuginnenraum zu erwärmen. Anschließend wird das Kältemittel über ein Rückschlagventil in einen in dem Klimagerät angeordneten Wärmetauscher mittels eines Expansionsorgans auf ein Zwischendruckniveau entspannt, um Wärme der Zuluft vom oder zum Kältemittel zu übertragen, insbesondere um die Zuluft in den Fahrzeuginnenraum zu trocknen. Dieser Wärmetauscher dient gleichzeitig im AC-Betrieb als Verdampfer zur Kühlung der Zuluft. Vom Zwischendruckniveau aus wird das Kältemittel im Heizbetrieb mittels eines weiteren Expansionsorgans unter Aufnahme von Wärme aus einer Wärmequelle mittels eines Kältemittel-Kühlmittel-Wärmetauschers auf ein Niederdruckniveau entspannt. Mit diesem Kältemittel-Kühlmittel-Wärmetauscher wird die Motorwärme aus einem Kühlmittelkreislauf auf das Kältemittel übertragen.

Dieser bekannte Kältemittelkreislauf gemäß der EP 1 456 046 B1 weist auch einen inneren Wärmeübertrager mit einem Hochdruckabschnitt und einem Niederdruckabschnitt auf. Im AC-Betrieb wird dieser innere Wärmeübertrager sowohl im Hochdruckabschnitt als auch im Niederdruckabschnitt von Kältemittel durchströmt, um Restwärme des Kältemittels von der Hochdruckseite auf der Niederdruckseite des Kältemittelkreislaufs zu übertragen. Im Wärmepumpenbetrieb wird der für den AC-Betrieb vorgesehene Verdampfer sowie das zugehörige Expansionsorgan über den Wärmepumpenleitungsabschnitt von Kältemittel durchströmt. Dabei verhindert ein Rückschlagventil ein Zurückströmen von Kältemittel in den Hochdruckabschnitt des inneren Wärmeübertragers.

Wird bei diesem bekannten Kältemittelkreislauf gemäß der EP 1 456 046 B1 im Wärmepumpenbetrieb die Umgebungsluft des Fahrzeugs als Wärmequelle eingesetzt, wird das auf Zwischendruckniveau entspannte Kältemittel aus dem in dem Klimagerät angeordneten Verdampfer über einen mit einem Expansionsorgan ausgebildeten Leitungsabschnitt direkt mit einem Gaskühler fluidverbunden, welcher im AC-Betrieb zur Abgabe von Wärme an die Umgebung in umgekehrter Richtung von Kältemittel durchströmt wird. Hierbei wird der Leitungsabschnitt, der einen Sammler und den Niederdruckabschnitt des inneren Wärmeübertragers mit dem Verdichter verbindet, mittels eines Ventils geschlossen. Damit wird weder der Hochdruckabschnitt noch der Niederdruckabschnitt des inneren Wärmeübertragers von Kältemittel durchströmt. Bei einem solchen Kältemittelkreislauf, bei welchem die Luft der Umgebung des Fahrzeugs als Wärmequelle zur Realisierung einer Wärmepumpe verwendet wird, ein hoher Verrohrungsaufwand erforderlich, um den inneren Wärmeübertrager inaktiv zu schalten.

Die DE 101 58 385 A1 beschreibt einen Kältemittelkreislauf, welcher ebenso als Wärmepumpe für einen Heizbetrieb des Fahrzeuginnenraums betrieben werden kann, wobei als Wärmequelle ein zu kühlendes Medium, bspw. die Ladeluft einer Brennkraftmaschine dient. Dieser bekannte Kältemittelkreislauf weist auch einen inneren Wärmeübertrager auf, welcher im Heizbetrieb sowohl auf der Hochdruckseite als auch auf der Niederdruckseite mit Kältemittel durchströmt wird. Die Niederdruckseite dieses inneren Wärmeübertragers kann mit einer geschalteten Bypassleitung kurzgeschlossen werden, um die Verdichtungsendtemperatur des Kältemittels auf der Hochdruckseite des Verdichters in zulässigen Grenzen zu halten. Damit wird dieser innere Wärmeübertrager inaktiv geschaltet, wodurch keine Wärme von dessen Hochdruckseite auf dessen Niederdruckseite übertragen wird. Diese zusätzliche Bypassleitung führt jedoch zu einem erhöhten Aufwand an Verrohrung zur Realisierung eines solchen Kältemittelkreislaufs.

Der im Stand der Technik aufgezeigte Mehraufwand an Verrohrung führt zu einem zusätzlichen Anlagenvolumen und damit zu einem erhöhten Füllmengenbedarf des Kältemittelkreislaufs sowie bei Einsatz von R744 als Kältemittel eine unvorteilhafte Annäherung an die 250 g/I-Vorgabe.

Es ist Aufgabe der Erfindung eine Kälteanlage mit einem Kältemittelkreislauf der eingangs genannten Art bereitzustellen, bei welchem im Wärmepumpenmodus der innere Wärmeübertrager funktional inaktiv betrieben wird, ohne dass hierfür ein Mehraufwand für Verrohrung, wie bspw. für Bypassleitungen erforderlich wäre.

Diese Aufgabe wird gelöst durch eine Kälteanlage mit den Merkmalen des Patentanspruchs 1 und mit den Merkmalen des Patentanspruchs 3.

Eine solche Kälteanlage eines Fahrzeugs mit einem als Kältekreislauf für einen AC-Betrieb und als Wärmepumpenkreislauf für einen Heizbetrieb betreibaren Kältemittelkreislauf umfasst:
- einen Verdampfer,
- einen Kältemittelverdichter,
- einen Wärmeübertrager als Kältemittelkondensator oder Gaskühler für den Kältemittelkreislauf oder als Wärmepumpenverdampfer für den Wärmepumpenkreislauf,
- ein dem Verdampfer zugeordnetes erstes Expansionsorgan,
- ein dem Wärmeübertrager in seiner Funktion als Wärmepumpenverdampfer zugeordnetes zweites Expansionsorgan,
- einen inneren Wärmeübertrager mit einem Hochdruckzweig und einem Niederdruckzweig, wobei der Niederdruckzweig mit dem stromabwärtsseitigen Kältemittelverdichter fluidverbunden ist, und
- einen Wärmepumpenleitungsabschnitt mit einem Heizregister zur Bildung des Wärmepumpenkreislaufs, welcher über ein Ventilorgan mit dem Kältekreislauf verbindbar und für den AC-Betrieb von dem Kältemittelkreislauf trennbar ist.

Erfindungsgemäß ist gemäß der erstgenannten Lösung vorgesehen, dass
- zur Durchführung einer Luft-Wärmepumpenfunktion mittels des Wärmeübertragers der Wärmepumpenleitungsabschnitt über das zweite Expansionsorgan mit dem Hochdruckabschnitt des inneren Wärmeübertragers fluidverbindbar, und
- der Hochdruckabschnitt des inneren Wärmeübertragers in einem das zweite Expansionsorgan mit dem Wärmeübertrager verbindenden Kältemittelkreislaufabschnitt angeordnet ist, und
- zur Durchführung des AC-Betriebs der Hochdruckabschnitt des inneren Wärmeübertragers mittels des zweiten Expansionsorgans mit der Reihenschaltung aus dem Verdampfer und dem zugehörigen ersten Expansionsorgan fluidverbindbar ist.

Bei dieser erfindungsgemäßen Kälteanlage ist der innere Wärmeübertrager derart in den Kältemittelkreis geschaltet, dass im Wärmepumpenbetrieb der ursprüngliche Hochdruckabschnitt auf einem Niederdruckniveau betrieben wird, welches dem Niederdruckniveau in dem Niederdruckabschnitt des inneren Wärmeübertragers entspricht. Damit sind diese beiden Strömungssektoren des inneren Wärmeübertragers auf gleichem Druckniveau, d. h. auch auf einem quasi identischen Temperaturniveau, infolgedessen auch kein Wärmeübergang zwischen den beiden Abschnitten des inneren Wärmeübertragers stattfinden kann. Damit wird der innere Wärmeübertrager im Wärmepumpenbetrieb zwar in einem aktiv durchströmten, aber in einem funktional inaktiven Zustand betrieben. Dies wird gemäß dieser Erfindung lediglich durch ein Umpositionieren des Expansionsorgans für den als Wärmepumpenverdampfer eingesetzten Wärmeübertrager für die Luft-Wärmepumpen-funktion, trotz aktiver Durchströmung der beiden Abschnitte des inneren Wärmeübertragers und ohne des Einsatzes einer zusätzlichen Verrohung, erreicht.

Mit diesem Wärmepumpenleitungsabschnitt kann die Luft-Wärmepumpenfunktion mit der Umgebungsluft als Wärmequelle realisiert werden. Hierzu wird mittels des zweiten Expansionsorgans das Kältemittel auf Niederdruck sowohl in den Hochdruckabschnitt des inneren Wärmeübertragers als auch in den als Wärmepumpenverdampfer eingesetzten Wärmeübertrager entspannt.

Das zweite Expansionsorgan ist steuerbar ausgebildet, so dass es in der für den AC-Betrieb erforderlichen Strömungsrichtung durchströmbar ist. Falls der entsprechende Strömungsquerschnitt für die AC-Funktion zu klein ist, ist weiterbildungsgemäß ein Rückschlagventil parallel zum zweiten Expansionsorgan derart geschaltet, dass im AC-Betrieb das Rückschlagventil im Durchlassbetrieb und im Heizbetrieb im Sperrbetrieb betreibbar ist.

Erfindungsgemäß ist gemäß der zweitgenannten Lösung vorgesehen, dass
- zur Durchführung einer Luft-Wärmepumpenfunktion mittels des Wärmeübertragers der Wärmepumpenleitungsabschnitt über das zweite Expansionsorgan mit dem Hochdruckabschnitt des inneren Wärmeübertragers fluidverbindbar, und
- der Hochdruckabschnitt des inneren Wärmeübertragers in einem das zweite Expansionsorgan mit dem Wärmeübertrager verbindenden Kältemittelkreislaufabschnitt angeordnet ist, und
- die Reihenschaltung aus dem Verdampfer und dem zugehörigen ersten Expansionsorgan mit einem den Hochdruckabschnitt des inneren Wärmeübertragers mit dem zweiten Expansionsorgan verbindenden Teilabschnitt des Kältemittelkreislaufabschnitts mittels eines steuerbaren Ventilorgans fluid-verbindbar ist.

Der Vorteil eines solchen Kältemittelkreislaufs neben den oben aufgeführten Vorteilen betreffend die erstgenannte Lösung besteht darin, dass bei Verwendung eines steuerbaren zweiten Expansionsorgans, sofern es dessen Funktion und Strömungsquerschnitt hinsichtlich bidirektionaler Durchströmung und Druck-/ Strömungsverlusten erlauben, für den AC-Betrieb kein Rückschlagventil erforderlich ist, welches eine Rückströmung in den Wärmepumpenleitungsabschnitt verhindert.

Zur Nutzung von elektrischen Komponenten als Wärmequellen ist nach einer weiteren vorteilhaften Ausgestaltung der Erfindung
- wenigstens ein Kältemittel-Kühlmittel-Wärmeübertrager mit einem Kühlmittelkreislauf vorgesehen, welcher wenigstens eine als Wärmequelle betriebene elektrische Komponente aufweist,
- ein dem Kältemittel-Kühlmittel-Wärmeübertrager zugeordnetes drittes Expansionsorgan vorgesehen, und
- die Reihenschaltung aus dem Verdampfer mit dem zugehörigen ersten Expansionsorgan parallel mit der Reihenschaltung aus dem Kältemittel-Kühlmittel-Wärmeübertrager mit dem zugehörigen dritten Expansionsorgan fluidverbunden.

Nach einer weiteren bevorzugten Weiterbildung ist die Reihenschaltung aus dem Kältemittel-Kühlmittel-Wärmeübertrager mit dem zugehörigen dritten Expansionsorgan mittels eines steuerbaren Ventilorgans mit dem Hochdruckabschnitt des inneren Wärmeübertragers fluidverbindbar.

Bei diesem erfindungsgemäßen Kältemittelkreislauf ist sowohl der Kältemittelzweig aus erstem Expansionsorgan und dem Verdampfer und dem hierzu parallelen Kältemittelzweig aus dem dritten Expansionsorgan und dem Kältemittel-Kühlmittel-Wärmeübertrager, auch Chiller genannt, direkt mit dem den Hochdruckabschnitt des inneren Wärmeübertragers mit dem zweiten Expansionsorgan verbindenden Teilabschnitt des Kältemittelkreislaufabschnitts fluidverbunden, wobei dieser Kältemittelkreislaufabschnitt den als Wärmepumpenverdampfer verwendeten Wärmeübertrager mit dem zweiten Expansionsorgan verbindet. Dieses steuerbare Ventilorgan verhindert, dass im Heizbetrieb unter ausschließlichem Einsatz des Chillers für die Wasser-Wärmepumpenfunktion kein Kältemittel in den Leitungszweig aus dem Hochdruckabschnitt des inneren Wärmeübertragers und dem als Wärmepumpenverdampfer verwendeten Wärmeübertrager eingelagert wird.

Die Erfindung wird nachfolgend anhand von Ausführungsbeispielen unter Bezugnahme auf die beigefügten Figuren ausführlich beschrieben. Es zeigen:
- Figur 1: ein Schaltbild einer Kälteanlage eines Fahrzeugs als Ausführungsbeispiel der Erfindung, und
- Figur 2: ein Schaltbild einer weiteren Kälteanlage eines Fahrzeugs als weiteres Ausführungsbeispiel der Erfindung.

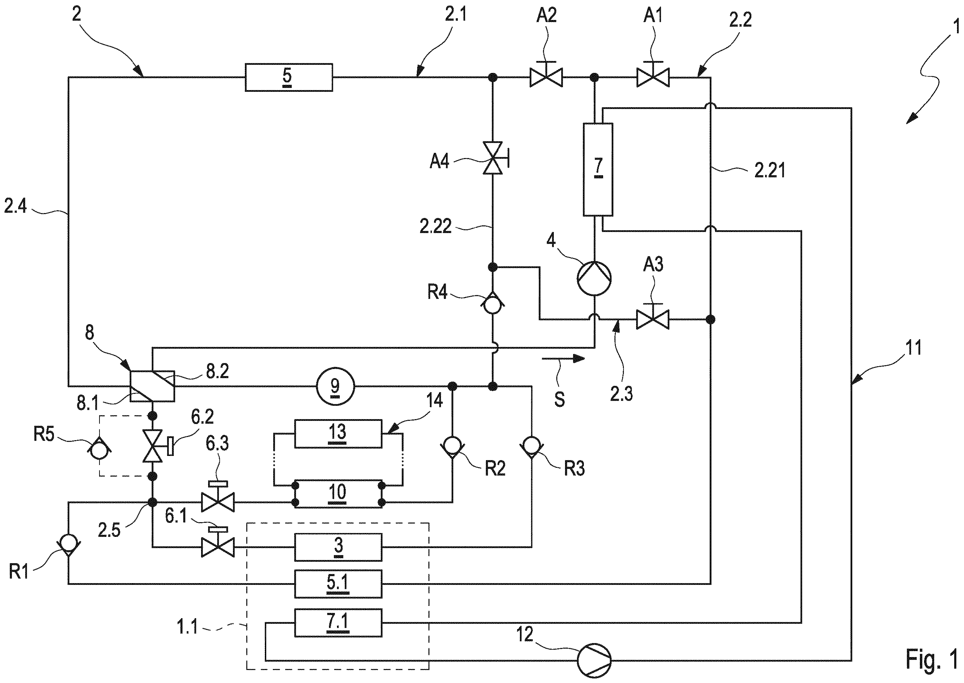

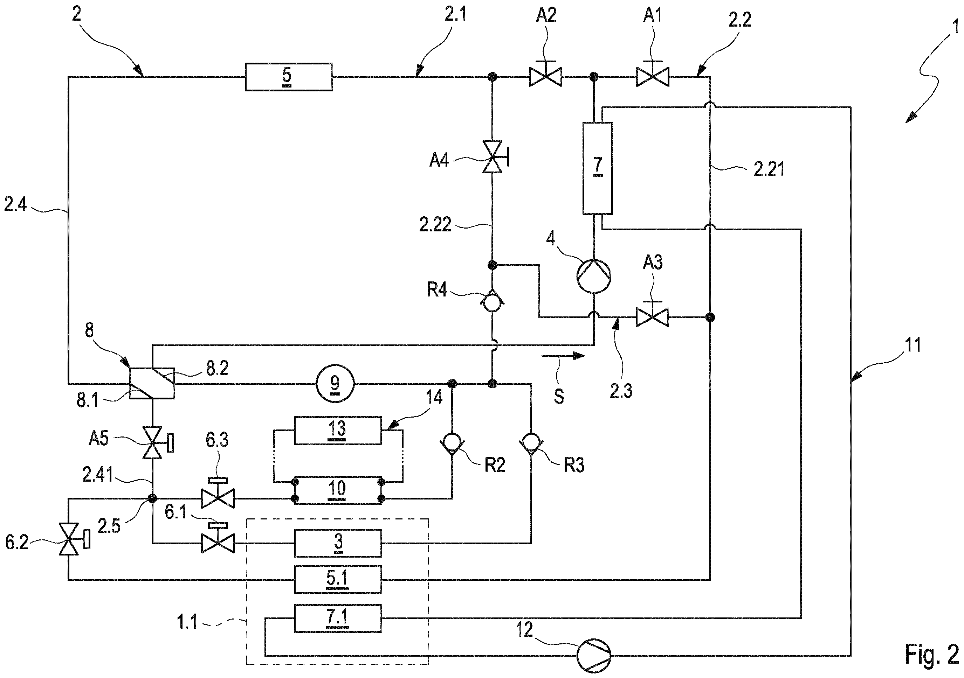

Die in den Figuren 1 und 2 dargestellten Fahrzeugkälteanlagen 1 weisen Kältemittelkreisläufe 2 mit einem Kältemittel, bspw. Kohlendioxid (R744) auf, die in ihrer Grundstruktur übereinstimmen und sowohl als Kältekreislauf für einen AC-Betrieb als auch als Wärmepumpenkreislauf für eine Heizfunktion betrieben werden können.

Jeder Kältemittelkreislauf 2 gemäß den Figuren 1 und 2 besteht zur Bildung eines Kältekreislaufs 2.1 ausgehend von einem Kältemittelverdichter 4 aus folgenden in Strömungsrichtung S des Kältemittels angeordneten Komponenten:
- einem auf Hochdruck arbeitenden Kältemittel-Kühlmittel-Wärmeübertrager 7, welcher mit einem Heizungswärmeübertrager 7.1 über einen Kühlmittelkreislauf 11, in welchem mittels einer Wasserpumpe 12 das Kühlmittel umgewälzt wird, thermisch verbunden ist,
- einem über ein als Absperrventil ausgebildetes Ventilorgan A2 mit dem Kältemittel-Kühlmittel-Wärmeübertrager 7 fluidverbindbaren Wärmeübertrager 5, der im AC-Betrieb der Fahrzeugkälteanlage 1 als Kältemittelkondensator bzw. Gaskühler arbeitet und im Wärmepumpenbetrieb die Funktion eines Wärmepumpenverdampfers übernimmt,
- einem inneren Wärmeübertrager 8 mit einem Hochdruckabschnitt 8.1 und einem Niederdruckabschnitt 8.2,
- einem Verdampfer 3 mit einem als Expansionsventil mit Absperrfunktion ausgebildeten ersten Expansionsorgan 6.1, wobei die Reihenschaltung aus dem ersten Expansionsorgan 6.1 und dem Verdampfer 3 über einen Verzweigungspunkt 2.5 des Kältemittelkreislaufs 2 mit dem Hochdruckabschnitt 8.1 nach Figur 1 mittels eines als Expansionsventil mit Absperrfunktion ausgebildeten zweiten Expansionsorgans 6.2 und nach Figur 2 mittels eines steuerbaren Ventilorgans A5 mit dem Hochdruckabschnitt 8.1 fluidverbunden ist, und
- einem dem Verdampfer 3 nachgeschalteten Rückschlagventil R3, mit welchem das Kältemittel aus dem Verdampfer 3 über einen Kältemittelsammler 9 und dem Niederdruckabschnitt 8.2 des inneren Wärmeübertragers 8 auf die Saugseite des Kältemittelverdichters 4 geleitet wird.

Ferner umfasst der Kältekreislauf 2.1 gemäß den Figuren 1 und 2 auch einen auf Niederdruckniveau arbeitenden Kältemittel-Kühlmittel-Wärmeübertrager 10, dem in Strömungsrichtung S des Kältemittels ein als Expansionsventil mit Absperrfunktion ausgebildetes drittes Expansionsorgan 6.3 vorgeschaltet und ein Rückschlagventil R2 nachgeschaltet ist. Diese Reihenschaltung aus dem dritten Expansionsorgan 6.3, dem Kältemittel-Kühlmittel-Wärmeüber-trager 10 und dem Rückschlagventil R2 ist einerseits mit dem Verzweigungspunkt 2.5 und andererseits mit dem Kältemittelsammler 9 fluidverbunden. Dieser Kältemittel-Kühlmittel-Wärmeübertrager 10 ist mit einem eine Wärmequelle 13 aufweisenden Kühlmittelkreislauf 14 thermisch gekoppelt, um diese Wärmequelle 13 als sogenanntem Chiller mittels Wasser als Kühlmittel zu kühlen. Als Wärmequelle 13 dient eine Traktionskomponente (elektrische Antriebsmaschine, Hochvoltbatterie, Ladeelektronik) des als Hybrid- oder Elektrofahrzeug ausgebildeten Fahrzeugs.

Zur Bildung eines Wärmepumpenkreislaufs 2.2 für den Heizbetrieb des Kältemittelkreislaufs 2 wird ein Wärmepumpenleitungsabschnitt 2.21 über ein als Absperrventil ausgebildetes Ventilorgan A1 mit dem Kältekreislauf 2.1 der Fahrzeugkälteanlage 1 fluidverbunden. Stromabwärtsseitig ist in diesem Wärmepumpenleitungsabschnitt 2.21 ein Heizregister 5.1 angeordnet, welches gemäß Figur 1 in Strömungsrichtung S über ein Rückschlagventil R1 mit dem Verzweigungspunkt 2.5 des Kältemittelkreislaufs 2 fluidverbunden ist. Nach Figur 2 ist dieses Heizregister 5.1 stromabwärts über ein als Expansionsventil mit Absperrfunktion ausgebildetes zweites Expansionsorgan 6.2 mit dem Verzweigungspunkt 2.5 des Kältemittelkreislaufs 2 fluidverbunden.

Der Verdampfer 3, der Heizungswärmeübertrager 7.1 und das Heizregister 5.1 sind gemäß den Figuren 1 und 2 gemeinsam in einem Klimagerät 1.1 der Fahrzeugkälteanlage 1 untergebracht.

Der Unterschied zwischen den Kältemittelkreisläufen 2 gemäß den Figuren 1 und 2 besteht in der Anordnung des zweiten Expansionsorgans 6.2 in dem Kältekreislauf 2.1 und dem Wärmepumpenkreislauf 2.2.

Dieses zweite Expansionsorgan 6.2 dient dazu, das Kältemittel in den als Wärmepumpenverdampfer im Wärmepumpenbetrieb verwendeten Wärmeübertrager 5 auf Niederdruckniveau zu entspannen. Um in diesem Wärmepumpenmodus, bei welchem als Wärmequelle die Umgebungsluft des Fahrzeugs mittels des Wärmeübertragers 5 verwendet wird, den inneren Wärmeübertrager 8 funktional inaktiv zu betreiben, ist gemäß Figur 1 der Hochdruckabschnitt 8.1 dieses inneren Wärmeübertragers 8 in einem das zweite Expansionsorgan 6.2 mit dem Wärmeübertrager 5 verbindenden Kältemittelkreislaufabschnitt 2.4 angeordnet, so dass das zweite Expansionsorgan 6.2 eine Fluidverbindung zwischen dem Hochdruckabschnitt 8.1 des inneren Wärmeübertragers 8 und dem Verzweigungspunkt 2.5 des Kältemittelkreislaufs 2 herstellt. Damit wird das Kältemittel in diesem Hochdruckabschnitt 8.1 ebenso auf Niederdruckniveau entspannt, welches im Wesentlichen dem Niederdruckniveau in dem Niederdruckabschnitt 8.2 des inneren Wärmeübertragers 8 entspricht. Hiermit wird weitestgehend ein Wärmeeintrag von dem Hochdruckabschnitt 8.1 auf den Niederdruckabschnitt 8.2 verhindert. Die Druckgleichheit entspricht in diesem Betriebsfall der Temperaturgleichheit der Medien in den beiden Leitungsabschnitten 8.1 und 8.2 des inneren Wärmeübertragers 8.

Neben dieser mit dem Wärmeübertrager 5 realisierten Luft-Wärmepumpe kann auch die Wärmequelle 13 des Chillers 10 für eine Wasser-Wärmepumpe eingesetzt werden. Diese Wasser-Wärmepumpe kann anstelle der Luft-Wärmepumpe oder zusätzlich zu dieser Luft-Wärmepumpe realisiert werden.

Nach Figur 2 ist der Hochdruckabschnitt 8.1 des inneren Wärmeübertragers 8 ebenso in einem das zweite Expansionsorgan 6.2 mit dem Wärmeübertrager 5 verbindenden Kältemittelkreislaufabschnitt 2.4 angeordnet, so dass mittels des zweiten Expansionsorgans 6.2 das Kältemittel sowohl in den Hochdruckabschnitt 8.1 als auch in den Wärmeübertrager 5 auf Niederdruckniveau entspannt wird und damit im Wesentlichen kein Wärmeeintrag in den Niederdruckabschnitt 8.2 erfolgt. Jedoch ist bei dieser Fahrzeugkälteanlage 1 gemäß Figur 2 in einem Teilabschnitt 2.41 des Kältemittelkreislaufabschnittes 2.4, welcher den Verzweigungspunkt 2.5 des Kältemittelkreislaufs 2 mit dem ersten Expansionsorgan 6.1 und dem dritten Expansionsorgan 6.3 fluidverbindet, ein steuerbares Ventilorgan A5 angeordnet. Im Unterschied zu Figur 1 ist bei der Kälteanlage 1 nach Figur 2 das zweite Expansionsorgan 6.2 in dem Wärmepumpenleitungsabschnitt 2.21 angeordnet.

Im Wärmepumpenbetrieb mittels der Luft-Wärmepumpe ist dieses Ventilorgan A5 geöffnet, so dass das Kühlmittel in den Hochdruckabschnitt 8.1 und den Wärmeübertrager 5 entspannt werden kann. Ist gleichzeitig auch das dritte Expansionsorgan 6.3 geöffnet, wird zusätzlich die Wasser-Wärmepumpe realisiert. Soll jedoch nur diese Wasser-Wärmepumpe mittels des Chillers 10 aktiviert werden, wird das Ventilorgan A5 geschlossen, um zu verhindern, dass Kältemittel in den Hochdruckabschnitt 8.1 und den Wärmeübertrager 5 strömen kann.

Im Wärmepumpenbetrieb des Kältemittelkreislaufs 2 wird bei den Ausführungsbeispielen gemäß den Figuren 1 und 2 mittels des auf Hochdruckniveau arbeitenden Kältemittel-Kühlmittel-Wärmeübertragers 7 das Kältemittel abgekühlt und die damit auf das Wasser als Kühlmittel übertragene Wärme dem Heizungswärmeübertrager 7.1 zugeführt, mit welchem die dem Fahrzeuginnenraum zugeführte Luft direkt erwärmt wird.

Eine weitere Kältemittelkühlung erfolgt bei den Ausführungsbeispielen gemäß den Figuren 1 und 2 mittels des dem Kältemittel-Kühlmittel-Wärmeübertrager 7 in Strömungsrichtung des Kältemittels nachgeschalteten Heizregisters 5.1 innerhalb des Klimagerätes 1.1.

Eine weitere Gemeinsamkeit der Kältemittelkreisläufe 2 gemäß den Figuren 1 und 2 besteht in einem weiteren Wärmepumpenleitungsabschnitt 2.22, welcher in Strömungsrichtung S des Kältemittels ein als Absperrventil ausgebildetes Ventilorgan A4 und ein Rückschlagventil R4 aufweist und den den Wärmeübertrager 5 mit dem weiteren Absperrventil A2 verbindenden Kältemittelleitungsabschnitt mit dem das Rückschlagventil R3 mit dem Kältemittelsammler 9 verbindenden Kältemittelleitungsabschnitt verbindet. In einer zusätzlichen Funktion kann der Abschnitt 2.22, speziell für den alleinigen Wärmepumpenbetrieb über den Kältemittel-Kühlmittel-Wärmeübertrager 10, auch als Absaugleitungsabschnitt funktionieren.

Schließlich weist der Kältemittelkreislauf 2 sowohl gemäß Figur 1 als auch gemäß Figur 2 einen Absaugleitungsabschnitt 2.3 auf, der den Wärmepumpenleitungsabschnitt 2.21 mit dem weiteren Wärmepumpenleitungsabschnitt 2.22 mittels eines als Absperrventil ausgebildeten Ventilorgans A3 fluidverbinden kann. An den weiteren Wärmepumpenleitungsabschnitt 2.22 ist das Absperrventil A3 stromaufwärtsseitig an den das Absperrventil A4 mit dem Rückschlagventil R4 verbindenden Leitungsabschnitt des weiteren Wärmepumpenleitungsabschnittes 2.22 angebunden, während stromabwärtsseitig eine Anbindung an den das Absperrventil A1 mit dem Heizregister 5.1 verbindenden Leitungsabschnitt des Wärmepumpenleitungsabschnittes 2.21 angebunden ist.

Zum Betreiben der Kälteanlage im Wärmepumpenmodus zum Heizen der Fahrzeugkabine werden die Absperrventile A1 und A4 geöffnet und das Absperrventil A2 wird geschlossen, d.h. der Wärmepumpenleitungsabschnitt 2.21 als auch der weitere Wärmepumpenleitungsabschnitt 2.22 werden mit dem Kältekreislauf 2.1 fluidverbunden.

So strömt bei der Kälteanlage 1 gemäß Figur 1 das mittels des Kältemittelverdichters 4 auf Hochdruck verdichtete Kältemittel über den Kältemittel-Kühlmittel-Wärmeübertrager 7 und das geöffnete Absperrventil A1 in den Wärmepumpenleitungsabschnitt 2.21. Das Kältemittel durchströmt das Heizregister 5.1, das Rückschlagventil R1 und wird über das zweite Expansionsorgan 6.2 in den Hochdruckabschnitt 8.1 des inneren Wärmeübertragers 8 und in den Wärmeübertrager 5 in seiner Funktion als Wärmepumpenverdampfer entspannt und nimmt als Verdampfungswärme die Umgebungswärme auf. Anschließend durchströmt das gasförmige Kältemittel bei geöffnetem Absperrventil A4 den weiteren Wärmepumpenleitungsabschnitt 2.22 und wird anschließend über den Kältemittelsammler 9, den Niederdruckabschnitt 8.2 des inneren Wärmeübertragers 8 zum Kältemittelverdichter 4 zurückgeführt. Damit wird die Wärme der Umgebungsluft des Fahrzeugs gemeinsam mit der über den Verdichter 4 eingetragenen Wärme in einer ersten Stufe mittels des Kältemittel-Kühlmittel-Wärmeübertragers 7 und des Kühlmittelkreislaufs 11 auf den Heizungswärmeübertrager 7.1 und damit auf die in das Fahrzeuginnere des Fahrzeugs geleitete Zuluft übertragen, nachdem die Zuluft in einer ersten Stufe mittels des Heizregisters 5.1 vorerwärmt und das Kältemittel weiter abgekühlt wird. Das erste und dritte Expansionsorgan 6.1 und 6.3 sind bei dieser Verschaltung als Wärmepumpenkreislauf 2.2 gesperrt.

Im Unterschied zu der Fahrzeugkälteanlage 1 gemäß Figur 1 strömt bei der in den Wärmepumpenmodus verschalteten Kälteanlage 1 nach Figur 2 das Kältemittel aus dem Heizregister 5.1 direkt in das zweite Expansionsorgan 6.2 und wird von dort über das geöffnete Ventilorgan A5 in den Hochdruckabschnitt 8.1 und den Wärmeübertrager 5 auf Niederdruck entspannt.

Somit wird bei den Kälteanlagen gemäß den Figuren 1 und 2 die Wärme der Umgebungsluft des Fahrzeugs gemeinsam mit der über den Verdichter 4 eingetragenen Wärme in einer ersten Stufe mittels des Kühlmittel-Wärmeübertragers 7 und des Heizungskreislaufs 11 auf den Heizungswärmeübertrager 7.1 und damit auf die in das Fahrzeuginnere des Fahrzeugs geleitete Zuluft übertragen, nachdem die Zuluft in einer ersten Stufe mittels des Heizregisters 5.1 vorerwärmt bzw. das Kältemittel weiter abgekühlt wird. Das erste und dritte Expansionsorgan 6.1 und 6.3 sind bei dieser Verschaltung als Wärmepumpenkreislauf 2.2 gesperrt.

Als Wärmequelle für den Wärmepumpenkreislauf 2.1 kann auch die Wärmequelle 13 des Chillers 10 eingesetzt werden. Hierzu wird das dritte Expansionsorgan 6.3 in den Kälteanlagen 1 gemäß den Figuren 1 und 2 geöffnet.

Bei der Kälteanlage 1 nach Figur 1 wird in diesem Fall der Wärmepumpenkreislauf 2.1 von den Komponenten Kältemittelverdichter 4, Kältemittel-Kühlmittel-Wärmeübertrager 7, Heizregister 5.1, Rückschlagventil R1, drittes Expansionsorgan 6.3, Kältemittel-Kühlmittel-Wärmeübertrager 10, Rückschlagventil R2, Kältemittelsammler 9 und innerer Wärmeübertrager 8 gebildet, wobei diese Komponenten in der aufgeführten Reihenfolge von dem Kältemittel in Strömungsrichtung S durchströmt werden. Hierbei ist das Absperrventil A1 geöffnet, während das Absperrventil A2 und das erste Expansionsorgan 6.1 geschlossen sind. Damit werden die elektrischen Komponenten 13 über den Chiller 10 als Wärmequellen verwendet. Sind das zweite Expansionsorgan 6.2 und das Absperrventil A4 aufgrund der Absaugung von umverlagertem Kältemittel in der Wärmepumpenverschaltungsvariante geöffnet, wird zusätzlich auch die Umgebungsluft als Wärmequelle verwendet. Dabei sind die beiden Expansionsorgane 6.2 und 6.3 geöffnet. Ist dagegen das zweite Expansionsorgan 6.2 geschlossen, wird nur die Wasser-Wärmepumpe mit dem Chiller 10 realisiert.

Bei der Kälteanlage nach Figur 2 wird in diesem Fall der Wärmepumpenkreislauf 2.1 von den Komponenten Kältemittelverdichter 4, Kältemittel-Kühlmittel-Wärmeübertrager 7, Heizregister 5.1, zweites Expansionsorgan 6.2, drittes Expansionsorgan 6.3, Kältemittel-Kühlmittel-Wärmeübertrager 10, Rückschlagventil R2, Kältemittelsammler 9 und innerer Wärmeübertrager 8 gebildet, wobei diese Komponenten in der aufgeführten Reihenfolge von dem Kältemittel in Strömungsrichtung S durchströmt werden. Hierbei ist das Absperrventil A1 geöffnet, während das Absperrventil A2, das erste Expansionsorgan 6.1 und das Ventilorgan A5 geschlossen sind. Damit wird lediglich die Wasser-Wärmepumpe auf der Basis des Chillers 10 zur Beheizung der Fahrzeugkabine eingesetzt. Ist auch das Ventilorgan A5 geöffnet, wird zusätzlich auch die Umgebungsluft als Wärmequelle verwendet.

Bei der Nutzung des Chillers 10 der Kälteanlage 1 nach Figur 2 zur Realisierung der Wasser-Wärmepumpe kann die Entspannung des Kältemittels auf Niederdruckniveau mittels der beiden Expansionsorgane 6.2 und 6.3 auf unterschiedliche Weisen durchgeführt werden. Ist das Ventilorgan A5 gesperrt, kann mit einem der beiden Expansionsorgane 6.2 oder 6.3 die Druckreduzierung erfolgen, wobei das andere Expansionsorgan vollständig geöffnet ist. Auch ist es möglich, mit beiden Expansionsorganen 6.2 und 6.3 eine gestufte Druckreduzierung durchzuführen.

Beim Umschalten von dem Betrieb des Kältemittelkreislaufs 2 als Wärmepumpenkreislauf 2.2 auf den AC-Betrieb werden gemäß den Figuren 1 und 2 die Absperrventile A1 und A4 geschlossen und das Absperrventil A2 geöffnet.

Im AC-Betrieb der Kälteanlage 1 nach Figur 1 durchströmt das mittels des Kältemittelverdichters 4 auf Hochdruck verdichtete Kältemittel in Strömungsrichtung S den Kältemittel-Kühlmittel-Wärmeübertrager 7, anschließend bei geschlossenem Absperrventil A1 das geöffnete Absperrventil A2, den Wärmeübertrager 5 als Gaskühler, den Hochdruckabschnitt 8.1 des inneren Wärmeübertragers 8, das vollständig auf maximalen Querschnitt geöffnete zweite Expansionsorgan 6.2 und wird anschließend mittels des ersten Expansionsorgans 6.1 in den Verdampfer 3 entspannt, wo es Wärme des dem Fahrzeuginnenraum zuführenden Zuluftstromes aufnimmt, bevor das dampfförmige Kältemittel anschließend über das Rückschlagventil R3, den Kältemittelsammler 9 und den Niederdruckabschnitt 8.2 des inneren Wärmeübertragers 8 zum Kältemittelverdichter 4 zurückgeführt wird. Mittels dieses Kältekreislaufs 2.1 wird die von dem in das Fahrzeuginnere geleiteten Zuluftstrom aufgenommene Wärme als Kondensationswärme im ersten Schritt mittels indirektem Wärmeübertrager 7 an den Heizungskreislauf 11 übertragen, der seinerseits durch geschicktes Verschalten mit einem Umgebungswärmeübertrager verbunden werden kann, um über diesen überschüssige Wärme an die Umgebung abgeben zu können, bevor in einem nächsten Schritt mittels des Wärmeübertragers 5 in seiner Funktion als Kondensator oder Gaskühler Restwärme an die Umgebungsluft des Fahrzeugs abgegeben wird.

Bei dieser Verschaltung als Kältekreislauf 2.1 gemäß Figur 1 sind die Absperrventile A1 und A4 geschlossen. Das Absperrventil A3 bleibt geöffnet, um umverlagertes Kältemittel aus dem Wärmepumpenleitungsabschnitt 2.21 in den aktiven Kreis 2.1 zu überführen. Falls bei diesem AC-Betrieb der Querschnitt des vollständig geöffneten zweiten Expansionsorgans 6.2 zu klein ist, kann mittels eines Rückschlagventil R5 eine dieses zweite Expansionsorgan 6.2 umgehende Bypassleitung realisiert werden, wie dies in Figur 1 optionsweise dargestellt ist.

Im AC-Betrieb der Kälteanlage 1 nach Figur 2 durchströmt das mittels des Kältemittelverdichters 4 auf Hochdruck verdichtete Kältemittel in Strömungsrichtung S den Kältemittel-Kühlmittel-Wärmeübertrager 7, anschließend bei geschlossenem Absperrventil A1 das geöffnete Absperrventil A2, den Wärmeübertrager 5 als Gaskühler, den Hochdruckabschnitt 8.1 des inneren Wärmeübertragers 8, das geöffnete Ventilorgan A5, welches zwangsläufig bidirektional durchströmbar sein muss (ansonsten analog zu Figur 1 ein Rückschlagventil R5 parallel zum Absperrventil A5 vorzusehen ist), und wird anschließend bei geschlossenem zweiten Expansionsorgan 6.2 mittels des ersten Expansionsorgans 6.1 in den Verdampfer 3 entspannt, wo es Wärme des dem Fahrzeuginnenraum zuführenden Zuluftstromes aufnimmt, bevor das dampfförmige Kältemittel anschließend über das Rückschlagventil R3, den Kältemittelsammler 9 und den Niederdruckabschnitt 8.2 des inneren Wärmeübertragers 8 zum Kältemittelverdichter 4 zurückgeführt wird. Mittels dieses Kältekreislaufs 2.1 wird die von dem in das Fahrzeuginnere geleiteten Zuluftstrom aufgenommene Wärme als Kondensationswärme im ersten Schritt mittels indirektem Wärmeübertrager 7 an den Heizungskreislauf 11 übertragen, der seinerseits durch geschicktes Verschalten mit einem Umgebungswärmeübertrager verbunden werden kann, um über diesen überschüssige Wärme an die Umgebung abgeben zu können, bevor in einem nächsten Schritt mittels des Wärmeübertragers 5 in seiner Funktion als Gaskühler Restwärme an die Umgebungsluft des Fahrzeugs abgegeben wird.

Ist im AC-Betrieb der Kälteanlagen 1 gemäß den Figuren 1 und 2 auch das dritte Expansionsorgan 6.3 offen, wird dadurch Kältemittel in den Chiller 10 entspannt, nimmt dabei die Abwärme der Wärmequelle 13 als Verdampfungswärme auf und wird ebenso über das Rückschlagventil R2, den Kältemittelsammler 9 und den inneren Wärmeübertrager 8 zum Kältemittelverdichter 4 zurückgeführt. Damit wird auch die Abwärme der Wärmequelle 13 als Kondensations-/Abkühlungswärme mittels des Wärmeübertragers 5 in seiner Funktion als Kondensator oder Gaskühler an die Umgebungsluft des Fahrzeugs abgegeben.

Damit ist nun gewährleistet, dass unabhängig von der jeweils gewählten Wärmepumpenverschaltung der Kälteanlage der innere Wärmeübertrager 8 nur für den Kälteanlagenmodus seine ihm zugedachte Funktion erfüllt. Im Wärmepumpenmodus gemäß den Figuren 1 und 2 ist er inaktiv, d.h.
- bei einer nur mit dem Chiller 10 durchgeführten Wärmepumpenfunktion ist einseitig der Niederdruckabschnitt 8.2 aktiv durchströmt, während der Hochdruckabschnitt 8.1 mit stehendem Kältemittel beaufschlagt ist, und
- bei einer mit dem Kondensator bzw. dem Gaskühler 5 durchgeführten Wärmepumpenfunktion (mit oder ohne Wasser-Wärmepumpe mittels des Chillers 10) ist der innere Wärmeübertrager 8 zwar beidseitig aktiv durchströmt, bewirkt aber aufgrund der resultierenden Druck- und Temperaturniveaus keinen nennenswerten Wärmeübergang.

### Bezugszeichen

- 1: Kälteanlage eines Fahrzeugs
- 1.1: Klimagerät der Kälteanlage 1

- 2: Kältemittelkreislauf
- 2.1: Kältekreislauf
- 2.2: Wärmepumpenkreislauf
- 2.21: Wärmepumpenleitungsabschnitt
- 2.22: weiterer Wärmepumpenleitungsabschnitt
- 2.3: Absaugleitungsabschnitt
- 2.4: Kältemittelkreislaufabschnitt
- 2.41: Teilabschnitt des Kältemittelkreislaufabschnittes 2.4

- 3: Verdampfer
- 4: Kältemittelverdichter
- 5: Wärmeübertrager
- 5.1: Heizregister
- 6.1: erstes Expansionsorgan
- 6.2: zweites Expansionsorgan
- 6.3: drittes Expansionsorgan
- 7: Kältemittel-Kühlmittel-Wärmeübertrager
- 7.1: Heizungswärmeübertrager
- 8: innerer Wärmeübertrager
- 8.1: Hochdruckabschnitt des inneren Wärmeübertragers 8
- 8.2: Niederdruckabschnitt des inneren Wärmeübertragers 8
- 9: Kältemittelsammler

- 10: Kältemittel-Kühlmittel-Wärmeübertrager, Chiller
- 11: Heizungskreislauf
- 12: Wasserpumpe
- 13: Wärmequelle des Kühlmittelkreislaufs 14
- 14: Kühlmittelkreislauf des Kältemittel-Kühlmittel-Wärmeübertragers 10

- R1: Rückschlagventil
- R2: Rückschlagventil
- R3: Rückschlagventil
- R4: Rückschlagventil
- R5: Rückschlagventil

- S: Strömungsrichtung des Kältemittelkreislaufs 2

- A1: Ventilorgan, Absperrventil
- A2: Ventilorgan, Absperrventil
- A3: Ventilorgan, Absperrventil
- A4: Ventilorgan, Absperrventil
- A5: Ventilorgan, Absperrventil

## Patentansprüche

1. Kälteanlage (1) eines Fahrzeugs mit einem als Kältekreislauf (2.1) für einen AC-Betrieb und als Wärmepumpenkreislauf (2.2) für einen Heizbetrieb betreibaren Kältemittelkreislauf (2),
umfassend:
- einen Verdampfer (3),
- einen Kältemittelverdichter (4),
- einen Wärmeübertrager (5) als Kältemittelkondensator oder Gaskühler für den Kältemittelkreislauf (2.1) oder als Wärmepumpenverdampfer für den Wärmepumpenkreislauf (2.2),
- ein dem Verdampfer (3) zugeordnetes erstes Expansionsorgan (6.1),
- ein dem Wärmeübertrager (5) in seiner Funktion als Wärmepumpenverdampfer zugeordnetes zweites Expansionsorgan (6.2),
- einen inneren Wärmeübertrager (8) mit einem Hochdruckabschnitt (8.1) und einem Niederdruckabschnitt (8.2), wobei der Niederdruckabschnitt mit dem stromabwärtsseitigen Kältemittelverdichter (4) fluidverbunden ist, und
- einen Wärmepumpenleitungsabschnitt (2.21) mit einem Heizregister (5.1) zur Bildung des Wärmepumpenkreislaufs (2.2), welcher über ein Ventilorgan (A1) mit dem Kältekreislauf (2.1) verbindbar und für den AC-Betrieb von dem Kältemittelkreislauf (2.1) trennbar ist,
**dadurch gekennzeichnet, dass**
- zur Durchführung einer Luft-Wärmepumpenfunktion mittels des Wärmeübertragers (5) der Wärmepumpenleitungsabschnitt (2.21) über das zweite Expansionsorgan (6.2) mit dem Hochdruckabschnitt (8.1) des inneren Wärmeübertragers (8) fluidverbindbar ist,
- der Hochdruckabschnitt (8.1) des inneren Wärmeübertragers (8) in einem das zweite Expansionsorgan (6.2) mit dem Wärmeübertrager (5) verbindenden Kältemittelkreislaufabschnitt (2.4) angeordnet ist, und
- zur Durchführung des AC-Betriebs der Hochdruckabschnitt (8.1) des inneren Wärmeübertragers (8) mittels des zweiten Expansionsorgans (6.2) mit der Reihenschaltung aus dem Verdampfer (3) und dem zugehörigen ersten Expansionsorgan (6.1) fluidverbindbar ist.

2. Kälteanlage (1) nach Anspruch 1,
**dadurch gekennzeichnet, dass** ein Rückschlagventil (R5) parallel zum zweiten Expansionsorgan (6.2) derart geschaltet ist, dass im AC-Betrieb das Rückschlagventil (R5) im Durchlassbetrieb und im Heizbetrieb im Sperrbetrieb betreibbar ist.

3. Kälteanlage (1) eines Fahrzeugs mit einem als Kältekreislauf (2.1) für einen AC-Betrieb und als Wärmepumpenkreislauf (2.2) für einen Heizbetrieb betreibaren Kältemittelkreislauf (2),
umfassend:
- einen Verdampfer (3),
- einen Kältemittelverdichter (4),
- einen Wärmeübertrager (5) als Kältemittelkondensator oder Gaskühler für den Kältemittelkreislauf (2.1) oder als Wärmepumpenverdampfer für den Wärmepumpenkreislauf (2.2),
- ein dem Verdampfer (3) zugeordnetes erstes Expansionsorgan (6.1),
- ein dem Wärmeübertrager (5) in seiner Funktion als Wärmepumpenverdampfer zugeordnetes zweites Expansionsorgan (6.2),
- einen inneren Wärmeübertrager (8) mit einem Hochdruckabschnitt (8.1) und einem Niederdruckabschnitt (8.2), wobei der Niederdruckabschnitt mit dem stromabwärtsseitigen Kältemittelverdichter (4) fluidverbunden ist, und
- einen Wärmepumpenleitungsabschnitt (2.21) mit einem Heizregister (5.1) zur Bildung des Wärmepumpenkreislaufs (2.2), welcher über ein Ventilorgan (A1) mit dem Kältekreislauf (2.1) verbindbar und für den AC-Betrieb von dem Kältemittelkreislauf (2.1) trennbar ist,
**dadurch gekennzeichnet, dass**
- zur Durchführung einer Luft-Wärmepumpenfunktion mittels des Wärmeübertragers (5) der Wärmepumpenleitungsabschnitt (2.21) über das zweite Expansionsorgan (6.2) mit dem Hochdruckabschnitt (8.1) des inneren Wärmeübertragers (8) fluidverbindbar ist,
- der Hochdruckabschnitt (8.1) des inneren Wärmeübertragers (8) in einem das zweite Expansionsorgan (6.2) mit dem Wärmeübertrager (5) verbindenden Kältemittelkreislaufabschnitt (2.4) angeordnet ist, und
- die Reihenschaltung aus dem Verdampfer (3) und dem zugehörigen ersten Expansionsorgan (6.1) mit einem den Hochdruckabschnitt (8.1) des inneren Wärmeübertragers (8) mit dem zweiten Expansionsorgan (6.2) verbindenden Teilabschnitt (2.41) des Kältemittelkreislaufabschnitts (2.4) mittels eines steuerbaren Ventilorgans (A5) fluidverbindbar ist.

4. Kälteanlage (1) nach einem der vorhergehenden Ansprüche,
**dadurch gekennzeichnet, dass**
- wenigstens ein Kältemittel-Kühlmittel-Wärmeübertrager (10) mit einem Kühlmittelkreislauf (14) vorgesehen ist, welcher wenigstens eine als Wärmequelle (13) betriebene elektrische Komponente aufweist,
- ein dem Kältemittel-Kühlmittel-Wärmeübertrager (10) zugeordnetes drittes Expansionsorgan (6.3) vorgesehen ist, und
- die Reihenschaltung aus dem Verdampfer (3) mit dem zugehörigen ersten Expansionsorgan (6.1) parallel mit der Reihenschaltung aus dem Kältemittel-Kühlmittel-Wärmeübertrager (10) mit dem zugehörigen dritten Expansionsorgan (6.3) fluidverbunden ist.

5. Kälteanlage (1) nach Anspruch 3 und 4,
**dadurch gekennzeichnet, dass** die Reihenschaltung aus dem Kältemittel-Kühlmittel-Wärmeüber-trager (10) mit dem zugehörigen dritten Expansionsorgan (6.3) mittels des steuerbaren Ventilorgans (A5) mit dem Hochdruckabschnitt (8.1) des inneren Wärmeübertragers (8) fluidverbindbar ist.

## Claims

1. Cooling system (1) of a vehicle, comprising a coolant circuit (2) which can be operated as a cooling circuit (2.1) for an AC operation and as a heat pump circuit (2.2) for a heating operation, comprising:
- an evaporator (3),
- a coolant compressor (4),
- a heat exchanger (5) as coolant condenser or gas cooler for the coolant circuit (2.1) or as heat pump evaporator for the heat pump circuit (2.2),
- a first expansion element (6.1) associated with the evaporator (3) ,
- a second expansion element (6.2) associated with the heat exchanger (5) when functioning as a heat pump evaporator,
- an internal heat exchanger (8) having a high-pressure section (8.1) and a low pressure section (8.2), wherein the low pressure section is fluidically connected to the downstream-side coolant compressor (4), and
- a heat pump pipe section (2.21) having a heat register (5.1) for forming the heat pump circuit (2.2), which can be connected to the cooling circuit (2.1) via a valve element (A1) and can be disconnected from the coolant circuit (2.1) for AC operation, **characterised in that**
- for performing an air-heat pump function by means of the heat exchanger (5) the heat pump pipe section (2.21) can be fluidically connected via the second expansion element (6.2) to the high-pressure section (8.1) of the internal heat exchanger (8),
- the high-pressure section (8.1) of the internal heat exchanger (8) is arranged in a coolant circuit section (2.4) connecting the second expansion element (6.2) to the heat exchanger (5), and
- for performing the AC operation the high-pressure section (8.1) of the inner heat exchanger (8) can be fluidically connected by means of the second expansion element (6.2) to the series connection of the evaporator (3) and the associated first expansion element (6.1).

2. Cooling system (1) according to claim 1, **characterised in that** a check valve (R5) is connected parallel to the second expansion element (6.2) in such a manner that the check valve (R5) can be operated in passage mode for AC operation and in blocking mode for heating operation.

3. Cooling system (1) of a vehicle, comprising a coolant circuit (2) which can be operated as a cooling circuit (2.1) for an AC operation and as a heat pump circuit (2.2) for a heating operation, comprising:
- an evaporator (3),
- a coolant compressor (4),
- a heat exchanger (5) as coolant condenser or gas cooler for the coolant circuit (2.1) or as heat pump evaporator for the heat pump circuit (2.2),
- a first expansion element (6.1) associated with the evaporator (3) ,
- a second expansion element (6.2) associated with the heat exchanger (5) when functioning as a heat pump evaporator,
- an internal heat exchanger (8) having a high-pressure section (8.1) and a low pressure section (8.2), wherein the low pressure section is fluidically connected to the downstream-side coolant compressor (4), and
- a heat-pump pipe section (2.21) having a heat register (5.1) for forming the heat-pump circuit (2.2), which can be connected via a valve element (A1) to the cooling circuit (2.1) and for AC operation can be disconnected from the coolant circuit (2.1), **characterised in that**
- for performing an air-heat pump function by means of the heat exchanger (5) the heat pump pipe section (2.21) can be fluidically connected via the second expansion element (6.2) to the high-pressure section (8.1) of the internal heat exchanger (8),
- the high-pressure section (8.1) of the internal heat exchanger (8) is arranged in a coolant circuit section (2.4) connecting the second expansion element (6.2) to the heat exchanger (5), and
- the series connection of the evaporator (3) and the associated first expansion element (6.1) can be fluidically connected to a partial section (2.41) of the coolant circuit section (2.4) connecting the high pressure section (8.1) of the internal heat exchanger (8) to the second expansion element (6.2) by means of a controllable valve element (A5).

4. Cooling system (1) according to any of the preceding claims, **characterised in that**
- at least one coolant-cooling medium heat exchanger (10) having a coolant circuit (14) is provided, which has at least one electric component operated as heat source (13),
- a third expansion element (6.3) associated with the coolant-cooling medium heat exchanger (10) is provided, and
- the series connection of the evaporator (3) with the associated first expansion element (6.1) is fluidically connected in parallel with the series connection of the coolant-cooling medium heat exchanger (10) with the associated third expansion element (6.3).

5. Cooling system (1) according to claim 3 and 4, **characterised in that** the series connection of the coolant-cooling medium heat exchanger (10) with the associated third expansion element (6.3) can be fluidically connected to the high-pressure section (8.1) of the internal heat exchanger (8) by means of the controllable valve element (A5).

## Revendications

1. Système de réfrigération (1) d'un véhicule avec un circuit de fluide frigorigène (2) pouvant fonctionner comme un circuit de réfrigération (2.1) en vue d'un fonctionnement en courant alternatif et comme un circuit de pompe à chaleur (2.2) en vue d'un fonctionnement de chauffage, comprenant :
- un évaporateur (3),
- un compresseur de fluide frigorigène (4),
- un échangeur de chaleur (5) faisant office de condenseur de fluide frigorigène ou de refroidisseur de gaz pour le circuit de fluide frigorigène (2.1) ou faisant office d'évaporateur de pompe à chaleur pour le circuit de pompe à chaleur (2.2),
- un premier organe de détente (6.1) associé à l'évaporateur (3),
- un deuxième organe de détente (6.2) associé à l'échangeur de chaleur (5) dans sa fonction d'évaporateur de pompe à chaleur,
- un échangeur de chaleur interne (8) avec une section haute pression (8.1) et une section basse pression (8.2), dans lequel la section basse pression est en communication fluidique avec le compresseur de fluide frigorigène (4) situé du côté aval, et
- une section de conduite de pompe à chaleur (2.21) avec un registre de chauffage (5.1) permettant de former le circuit de pompe à chaleur (2.2), qui peut, par l'intermédiaire d'un organe formant soupape (A1), être reliée au circuit de réfrigération (2.1) et être coupée du circuit de fluide frigorigène (2.1) en vue du fonctionnement en courant alternatif, **caractérisé en ce que**
- la section de conduite de pompe à chaleur (2.21) peut être reliée de manière fluidique à la section haute pression (8.1) de l'échangeur de chaleur interne (8) par l'intermédiaire du deuxième organe de détente (6.2) afin de mettre en œuvre une fonction de pompe à chaleur à air au moyen de l'échangeur de chaleur (5),
- la section haute pression (8.1) de l'échangeur de chaleur interne (8) est agencée dans une section de circuit de fluide frigorigène (2.4) reliant le deuxième organe de détente (6.2) à l'échangeur de chaleur (5), et
- la section haute pression (8.1) de l'échangeur de chaleur interne (8) peut, au moyen du deuxième organe de détente (6.2) et en vue de la mise en œuvre du fonctionnement en courant alternatif,être reliée de manière fluidique au montage en série comprenant l'évaporateur (3) et le premier organe de détente (6.1) associé.

2. Système de réfrigération (1) selon la revendication 1, **caractérisé en ce qu'**une soupape antiretour (R5) est montée parallèlement au deuxième organe de détente (6.2) de telle manière que la soupape antiretour (R5) peut fonctionner en mode ouvert lors du fonctionnement en courant alternatif et en mode fermé lors du fonctionnement de chauffage.

3. Système de réfrigération (1) d'un véhicule avec un circuit de fluide frigorigène (2) pouvant fonctionner comme un circuit de réfrigération (2.1) en vue d'un fonctionnement en courant alternatif et comme un circuit de pompe à chaleur (2.2) en vue d'un fonctionnement de chauffage, comprenant :
- un évaporateur (3),
- un compresseur de fluide frigorigène (4),
- un échangeur de chaleur (5) faisant office de condenseur de fluide frigorigène ou de refroidisseur de gaz pour le circuit de fluide frigorigène (2.1) ou faisant office d'évaporateur de pompe à chaleur pour le circuit de pompe à chaleur (2.2),
- un premier organe de détente (6.1) associé à l'évaporateur (3) ,
- un deuxième organe de détente (6.2) associé à l'échangeur de chaleur (5) dans sa fonction d'évaporateur de pompe à chaleur,
- un échangeur de chaleur interne (8) avec une section haute pression (8.1) et une section basse pression (8.2), dans lequel la section basse pression est en communication fluidique avec le compresseur de fluide frigorigène (4) situé du côté aval, et
- une section de conduite de pompe à chaleur (2.21) avec un registre de chauffage (5.1) permettant de former le circuit de pompe à chaleur (2.2), qui peut, par l'intermédiaire d'un organe formant soupape (A1), être reliée au circuit de réfrigération (2.1) et être coupée du circuit de fluide frigorigène (2.1) en vue du fonctionnement en courant alternatif, caractérisé (5.2) en ce que
- la section de conduite de pompe à chaleur (2.21) peut être reliée de manière fluidique à la section haute pression (8.1) de l'échangeur de chaleur interne (8) par l'intermédiaire du deuxième organe de détente (6.2) afin de mettre en œuvre une fonction de pompe à chaleur à air au moyen de l'échangeur de chaleur (5),
- la section haute pression (8.1) de l'échangeur de chaleur interne (8) est agencée dans une section de circuit de fluide frigorigène (2.4) reliant le deuxième organe de détente (6.2) à l'échangeur de chaleur (5), et
- le montage en série comprenant l'évaporateur (3) et le premier organe de détente (6.1) associé peut, au moyen d'un organe formant soupape (A5) pouvant être commandé, être relié de manière fluidique à une sous-section (2.41), reliant la section haute pression (8.1) de l'échangeur de chaleur interne (8) au deuxième organe de détente (6.2), de la section de circuit de fluide frigorigène (2.4).

4. Système de réfrigération (1) selon l'une quelconque des revendications précédentes, **caractérisé en ce que**
- au moins un échangeur de chaleur de fluide frigorigène/fluide de refroidissement (10) avec un circuit de fluide de refroidissement (14) présentant au moins un composant électrique fonctionnant comme une source de chaleur (13) est prévu,
- un troisième organe de détente (6.3) associé à l'échangeur de chaleur de fluide frigorigène/fluide de refroidissement (10) est prévu, et
- le montage en série comprenant l'évaporateur (3) avec le premier organe de détente (6.1) associé est relié de manière fluidique parallèlement au montage en série comprenant l'échangeur de chaleur de fluide frigorigène/fluide de refroidissement (10) avec le troisième organe de détente (6.3) associé.

5. Système de réfrigération (1) selon les revendications 3 et 4, **caractérisé en ce que** le montage en série comprenant l'échangeur de chaleur fluide frigorigène/fluide de refroidissement (10) avec le troisième organe de détente (6.3) associé peut être relié de manière fluidique à la section haute pression (8.1) de l'échangeur de chaleur interne (8) au moyen de l'organe formant soupape (A5) pouvant être commandé.
